# FASCICULE DE BREVET EUROPEEN

(11) **EP 2 367 052 B1**
(45) Date de publication et mention de la délivrance du brevet: **26.12.2018**
(21) Numéro de dépôt: 11156525.5
(22) Date de dépôt: 02.03.2011
(51) Int. Cl.: B60S 1/08, G02B 13/00

(54) **Caméra agencée pour pouvoir être embarquée sur un véhicule**
Kamera eingerichtet zum Einbauen an Bord eines Fahrzeugs
Camera arranged for installation on board of a vehicle

(30) Priorité: 05.03.2010 FR 1051602
(43) Date de publication de la demande: 21.09.2011
(73) Titulaire: VALEO VISION, 93012 Bobigny (FR)
(72) Inventeur: Mulin, Alice, 25170 NOIRONTE (FR); Robert, Caroline, 75017 PARIS (FR)
(74) Mandataire: Claassen, Maarten Pieter

(56) Documents cités:
- EP-A1- 1 923 280
- EP-A1- 1 923 695
- EP-A1- 2 062 777
- WO-A1-2006/015905
- DE-A1-102004 015 040

## Description

L'invention concerne notamment une caméra agencée pour pouvoir être embarquée sur un véhicule.

On connaît par la demande de brevet EP 1 923 280 un capteur photosensible qui peut servir à plusieurs applications.

Le document DE 10 2004 015 040 décrit une caméra avec capteur de pluie intégré et un arrêt de champ pour éviter la lumière parasite sur la zone du détecteur qui est utilisée comme capteur de pluie.

Actuellement la détection de pluie, pour un véhicule, se fait à l'aide d'un capteur de pluie distinct de la caméra frontale. Cette dernière est utilisée pour des fonctions d'aide à la conduite nécessitant une vision en champ lointain (environ à 150 mètres).

Afin de rendre le système plus compact et moins coûteux que l'actuel, l'intégration de la fonction de détection de pluie dans une caméra multifonction du véhicule automobile est envisagée.

L'invention vise donc notamment à obtenir à l'aide d'une seule caméra la restitution à la fois de la scène routière en champ lointain (environ à 150 mètres) et du pare-brise (environ 30 mm).

On connaît par la demande de brevet WO 2006/015905 un module optique embarqué. La détection de pluie se fait par l'ajout d'un élément extérieur à la caméra. La mise en place de ce système peut poser un problème au niveau de l'encombrement et le positionnement (alignement...).

L'invention a ainsi pour objet une caméra agencée pour pouvoir être embarquée sur un véhicule automobile, comportant :
- un capteur électronique,
- un dispositif optique multifocal, notamment bifocal,
- un objectif optique notamment focalisé en champ lointain,
le dispositif optique multifocal et l'objectif optique étant agencés pour pouvoir former, sur le capteur, une première image focalisée en champ lointain et une deuxième image focalisée en champ proche, ces première et deuxième images s'étendant dans des régions respectives distinctes du capteur et par le fait que le dispositif multifocal comporte une région formant cache disposée entre une zone optiquement neutre et une zone optiquement active, cette région formant cache étant notamment agencée pour limiter le recouvrement entre les première et deuxième images sur le capteur.

Autrement dit, selon l'invention, ces première et deuxième images ne se recouvrent pas complètement. Eventuellement ces images peuvent se recouvrir partiellement. Ces images peuvent encore être juxtaposées, sensiblement sans se recouvrir.

Selon l'invention, la caméra sert de préférence à la détection de pluie, notamment de gouttes de pluie sur le pare-brise du véhicule, et également de préférence, pour une ou plusieurs autres fonctions d'aide à la conduite telles que la détection d'obstacles sur la route, l'automatisation des projecteurs, la détection de lignes, la détection de brouillard, la mesure de visibilité....

La caméra selon l'invention peut ainsi être une caméra multifonction.

L'image focalisée en champ lointain peut, si on le souhaite, couvrir une superficie sur le capteur supérieure à celle couverte par l'image en champ proche sur le capteur.

Par exemple, l'image en champ lointain peut couvrir environ 80% de la superficie du capteur et l'image en champ proche environ 20% de la superficie du capteur.

L'invention permet d'obtenir, le cas échéant, sur le capteur, une première image nette des gouttes d'eau sur le pare-brise avec en arrière-plan, dans cette même image, la scène routière qui est floue, sensiblement juxtaposée à une deuxième image nette de la scène de route, même si des gouttes d'eau sont présentes sur le pare-brise.

Ainsi les avantages d'une vision à l'infini nette et d'une vision en champ proche nette sont préservés simultanément.

Les algorithmes de détection peuvent ainsi être appliqués sur la zone de l'image correspondant à leur besoin de façon optimale.

Chaque partie de l'image est en quelque sorte optimale pour chaque catégorie de logiciel (software) : optimale pour la détection de gouttes avec la partie focalisée en champ proche et optimale pour les applications en champ lointain avec la partie de l'image focalisée à l'infini.

Dans un exemple de mise en oeuvre de l'invention, le dispositif multifocal est placé entre le capteur et l'objectif.

L'invention permet d'avoir un encombrement réduit, et d'avoir une caméra relativement simple et peu coûteuse.

Avantageusement la caméra comporte un support, notamment comprenant une carte de circuit imprimé, sur lequel est placé le capteur.

Le dispositif optique multifocal peut être solidaire de ce support ou, en variante, le dispositif bifocal peut en être distant, étant par exemple en contact avec et/ou solidaire de l'objectif, voire distant à la fois du support et de l'objectif.

De préférence la caméra comporte une lame de protection du capteur, et le dispositif optique multifocal est par exemple accolé, notamment collé, à cette lame de protection.

Le cas échéant, le dispositif optique multifocal est placé directement devant le capteur, et sert de préférence également à la protection du capteur.

Dans un exemple de mise en oeuvre de l'invention, le dispositif optique multifocal comporte une lame, notamment en plastique ou en verre, par exemple réalisée en N-BK7.

Le dispositif multifocal est de préférence réalisé d'un seul tenant.

En variante, le dispositif multifocal comporte une pluralité d'éléments, éventuellement assemblés entre eux.

Dans un exemple de mise en oeuvre de l'invention, le dispositif multifocal comporte une zone optiquement neutre, associée à la première image en champ lointain, formée par exemple entre deux faces principales sensiblement parallèles du dispositif et une zone optiquement active, associée à la deuxième image en champ proche, cette zone optiquement active étant notamment une zone formant une lentille convergente.

La zone optiquement active sert notamment à imager une zone suffisante du pare-brise sur le capteur.

Le cas échéant, la zone optiquement active est éloignée des bords du dispositif multifocal, notamment des bords de la lame lorsque cette zone est formée sur la lame.

Si on le souhaite, l'objectif présente un axe optique, et la zone optiquement active présente un centre optique décalé par rapport à l'axe optique de l'objectif.

En optique, le centre optique représente un point particulier d'un système tel qu'un rayon lumineux incident en ce point n'est pas dévié : ses parties incidentes et émergentes sont parallèles entre elles

Ce décentrement permet notamment de partitionner au mieux le capteur.

Si on le souhaite, le dispositif multifocal comporte une zone optiquement neutre formée notamment entre deux faces principales sensiblement parallèles du dispositif, et une zone optiquement active, cette zone optiquement active étant d'un matériau différent de celui de la zone optiquement neutre.

Le positionnement du dispositif bifocal est fixe de préférence entre l'objectif et le capteur de la caméra.

Avantageusement le dispositif multifocal comporte une région formant cache disposée entre une zone optiquement neutre et une zone optiquement active, cette région formant cache étant agencée pour limiter le recouvrement entre les première et deuxième images sur le capteur.

Ce cache peut être rapporté sur la lame du dispositif multifocal ou, en variante, être formé directement sur la lame.

Ce cache permet de couper des rayons lumineux provenant du pare-brise et se focalisant dans la zone de recouvrement des première et deuxième images, ce qui permet d'avoir une meilleure juxtaposition des deux images.

Si on le souhaite, le dispositif multifocal, notamment la lame, ne présente pas de symétrie de révolution, étant notamment de forme non circulaire.

La lame présente par exemple une forme sensiblement rectangulaire.

L'invention a également pour objet un procédé de commande d'un ou plusieurs balais d'essuyage d'un pare-brise de véhicule automobile, comportant les étapes suivantes :
- détecter la présence de pluie sur le pare-brise du véhicule à l'aide d'une caméra telle que définie ci-dessus,
- déclencher, en cas de présence de pluie sur le pare-brise, le ou les balais d'essuyage.

Selon l'invention, la détection de pluie est réalisée de préférence par la caméra multifonction, sans l'aide d'un capteur distinct de cette caméra.

L'invention a encore pour objet un procédé de détection de pluie utilisant une caméra telle que définie plus haut.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, des éléments d'une caméra selon un exemple de mise en oeuvre de l'invention,
- la figure 2 représente, schématiquement et partiellement, suivant une vue différente, des éléments de la caméra de la figure 1,
- la figure 3 représente, schématiquement et partiellement, un dispositif bifocal de la caméra des figures 1 et 2,
- la figure 4 montre schématiquement des images sur le capteur de la caméra, et
- la figure 5 illustre un autre exemple de réalisation de l'invention.

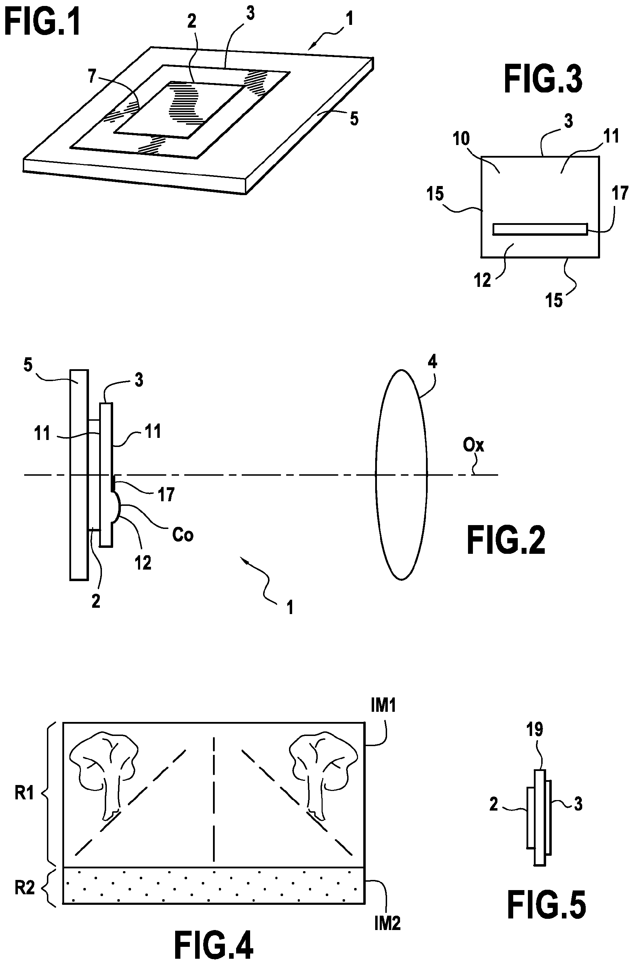

On a représenté sur les figures 1 et 2 différents éléments d'une caméra 1, conforme à un exemple de mise en oeuvre de l'invention, agencée pour pouvoir être embarquée sur un véhicule automobile, cette caméra comportant :
- un capteur électronique photosensible 2, ayant une matrice de cellules photosensibles,
- un dispositif optique bifocal 3, de forme sensiblement rectangulaire,
- un objectif optique 4 focalisé en champ lointain.

Le dispositif optique bifocal 3 et l'objectif optique 4 sont agencés pour pouvoir former, sur le capteur 2, une première image IM1 focalisée en champ lointain et une deuxième image IM2 focalisée en champ proche, comme illustré sur la figure 4.

La camera est placée avantageusement en zone essuyée, à l'intérieur du véhicule.

Par exemple, la caméra est placée derrière le rétroviseur intérieur, contre le pare-brise du véhicule.

Les première et deuxième images IM1 et IM2 s'étendent dans des régions respectives R1 et R2 distinctes du capteur 2.

Autrement dit, selon l'invention, ces première et deuxième images IM1 et IM2 ne se recouvrent pas complètement. Eventuellement ces images peuvent se recouvrir partiellement. En variante, ces images peuvent être juxtaposées, sensiblement sans se recouvrir.

La caméra 1 sert pour la détection de pluie, notamment de gouttes de pluie sur le pare-brise du véhicule, et également pour une ou plusieurs autres fonctions d'aide à la conduite telles que la détection d'obstacles sur la route, l'automatisation des projecteurs, la détection de lignes, la détection de brouillard, la mesure de visibilité....

La caméra 1 est ainsi une caméra multifonction.

L'image IM1 focalisée en champ lointain peut, si on le souhaite, couvrir une superficie sur le capteur supérieure à celle couverte par l'image IM2 en champ proche sur le capteur.

Par exemple, l'image IM1 en champ lointain peut couvrir environ 80% de la superficie du capteur 2 et l'image IM2 en champ proche environ 20% de la superficie du capteur 2.

L'invention permet d'obtenir, sur le capteur 2, une première image IM2 nette des gouttes d'eau sur le pare-brise avec en arrière-plan, dans cette même image, la scène routière qui est floue, sensiblement juxtaposée à une deuxième image nette IM1 de la scène de route, même si des gouttes d'eau sont présentes sur le pare-brise.

Dans l'exemple décrit, le dispositif bifocal 3 est placé entre le capteur 2 et l'objectif 4.

Dans un exemple non limitatif de l'invention, la caméra 1 comporte un support 5, notamment comprenant une carte de circuit imprimé, sur lequel est placé le capteur 2.

Le dispositif optique bifocal 3 peut être solidaire de ce support 5, comme visible sur la figure 1.

En variante, le dispositif bifocal 3 est en contact avec et/ou solidaire de l'objectif 4.

En variante encore, le dispositif bifocal 3 est placé entre le capteur 2 et l'objectif 4 sans être solidaire du capteur 2 du support 5 ni de l'objectif 4.

Dans l'exemple des figures 1 et 2, le dispositif optique bifocal 3 est placé directement devant le capteur 2, et sert également à la protection du capteur 2.

Le dispositif optique bifocal 3 comporte une lame 7 réalisée en N-BK7.

Ce dispositif bifocal 3 comporte une zone optiquement neutre 10 (associée à IM1) formée entre deux faces principales 11 sensiblement parallèles du dispositif et une zone optiquement active 12 (associée à IM2), cette zone optiquement active 12 étant une zone formant par exemple une lentille convergente.

La zone optiquement active 12 est éloignée des bords 15 du dispositif bifocal, notamment des bords de la lame lorsque cette zone est formée sur la lame 7.

Cette zone 12 présente par exemple une forme bombée.

L'objectif 4 présente un axe optique Ox, et la zone optiquement active 12 présente un centre optique CO décalé par rapport à l'axe optique Ox de l'objectif.

Dans un exemple de réalisation, l'objectif 4 est formé d'un train de lentilles associées pour imager l'infini à un point focal. L'objectif 4 est avantageusement placé de sorte que le point focal du train de lentilles soit localisé sur le capteur 2 tenant compte des éléments optiques traversés.

Le dispositif bifocal 3 comporte une région formant cache 17 disposée entre la zone optiquement neutre 10 et la zone optiquement active 12, cette région formant cache 17 étant agencée pour limiter le recouvrement entre les première et deuxième images IM1 et IM2 sur le capteur.

Bien entendu, l'invention n'est pas limitée à l'exemple qui vient d'être décrit.

Par exemple, le dispositif bifocal 3 peut comporter deux éléments distincts et assemblés entre eux.

Par exemple, la zone optiquement active peut être formée sur une lentille distincte de la zone neutre.

Comme illustré sur la figure 5, la caméra peut comporter une lame de protection 19 du capteur 2, et le dispositif optique multifocal 3 est par exemple accolé, notamment collé, à cette lame de protection 19.

## Revendications

1. Caméra (1) agencée pour pouvoir être embarquée sur un véhicule automobile, comportant :
- un capteur électronique (2),
- un dispositif optique multifocal, notamment bifocal (3),
- un objectif optique (4) focalisé en champ lointain,
le dispositif optique multifocal et l'objectif optique étant agencés pour pouvoir former, sur le capteur, une première image (IM1) focalisée en champ lointain et une deuxième image (IM2) focalisée en champ proche, ces première et deuxième images s'étendant dans des régions respectives distinctes du capteur **caractérisée par le fait que** le dispositif multifocal comporte une région formant cache (17) disposée entre une zone optiquement neutre et une zone optiquement active, cette région formant cache étant notamment agencée pour limiter le recouvrement entre les première et deuxième images sur le capteur.

2. Caméra selon la revendication précédente, **caractérisée par le fait que** le dispositif multifocal (3) est placé entre le capteur et l'objectif.

3. Caméra selon l'une des revendications précédentes, **caractérisée par le fait que** la caméra comporte un support (5), notamment comprenant une carte de circuit imprimé, sur lequel est placé le capteur, et **par le fait que** le dispositif optique multifocal est solidaire de ce support.

4. Caméra selon la revendication précédente, **caractérisée par le fait que** la caméra comporte une lame de protection du capteur, et **par le fait que** le dispositif optique multifocal est accolé à cette lame de protection.

5. Caméra selon l'une des revendications 1 à 3, **caractérisée par le fait que** le dispositif optique multifocal est placé directement devant le capteur (2), et sert de préférence également à la protection du capteur.

6. Caméra selon l'une des revendications précédentes, **caractérisée par le fait que** le dispositif optique multifocal comporte une lame, notamment réalisée en verre.

7. Caméra selon l'une des revendications précédentes, **caractérisée par le fait que** le dispositif multifocal comporte une zone optiquement neutre (10) formée notamment entre deux faces principales sensiblement parallèles du dispositif et une zone optiquement active (12), cette zone optiquement active étant notamment une zone formant une lentille convergente.

8. Caméra selon la revendication précédente, **caractérisée par le fait que** la zone optiquement active est éloignée des bords du dispositif multifocal.

9. Caméra selon l'une des revendications 7et 8, l'objectif présentant un axe optique (Ox), **caractérisée par le fait que** la zone optiquement active présente un centre optique décalé par rapport à l'axe optique de l'objectif.

10. Procédé de commande d'un ou plusieurs balais d'essuyage d'un pare-brise de véhicule automobile, comportant les étapes suivantes :
- détecter la présence de pluie sur le pare-brise du véhicule à l'aide d'une caméra selon l'une des revendications précédentes,
- déclencher, en fonction de la présence de pluie sur le pare-brise, le ou les balais d'essuyage.

11. Procédé selon la revendication précédente, **caractérisé par le fait que** la détection de pluie est réalisée par la caméra multifonction, sans l'aide d'un capteur distinct de cette caméra.

## Patentansprüche

1. Kamera (1), die zum Einbau an Bord eines Kraftfahrzeugs eingerichtet ist, umfassend:
- einen elektronischen Sensor (2),
- eine multifokale, insbesondere bifokale, optische Vorrichtung (3),
- ein optisches Objektiv (4), das im Fernfeld fokussiert ist,
wobei die multifokale optische Vorrichtung und das optische Objektiv eingerichtet sind, auf dem Sensor ein erstes Bild (IM1), das im Fernfeld fokussiert ist, und ein zweites Bild (IM2), das im Nahfeld fokussiert ist, bilden zu können, wobei sich dieses erste und zweite Bild in jeweiligen separaten Bereichen des Sensors erstrecken, **dadurch gekennzeichnet, dass** die multifokale Vorrichtung einen Bereich umfasst, der eine Abdeckung (17) bildet, die zwischen einer optisch neutralen Zone und einer optisch aktiven Zone angeordnet ist, wobei dieser Bereich, der eine Abdeckung bildet, insbesondere eingerichtet ist, die Überlappung zwischen dem ersten und dem zweiten Bild auf dem Sensor zu begrenzen.

2. Kamera nach dem vorhergehenden Anspruch, **dadurch gekennzeichnet, dass** die multifokale Vorrichtung (3) zwischen dem Sensor und dem Objektiv platziert ist.

3. Kamera nach einem der vorhergehenden Ansprüche, **dadurch gekennzeichnet, dass** die Kamera einen Träger (5) umfasst, der insbesondere eine Leiterplatte aufweist, auf welcher der Sensor platziert ist, und dadurch, dass die multifokale optische Vorrichtung mit diesem Träger fest verbunden ist.

4. Kamera nach dem vorhergehenden Anspruch, **dadurch gekennzeichnet, dass** die Kamera ein Schutzplättchen des Sensors umfasst, und dadurch, dass die multifokale optische Vorrichtung an dieses Schutzplättchen angefügt ist.

5. Kamera nach einem der Ansprüche 1 bis 3, **dadurch gekennzeichnet, dass** die multifokale optische Vorrichtung direkt vor dem Sensor (2) platziert ist und vorzugsweise auch als Schutz des Sensors dient.

6. Kamera nach dem vorhergehenden Anspruch, **dadurch gekennzeichnet, dass** die multifokale Vorrichtung ein Plättchen umfasst, das insbesondere aus Glas gefertigt ist.

7. Kamera nach einem der vorhergehenden Ansprüche, **dadurch gekennzeichnet, dass** die multifokale Vorrichtung eine optisch neutrale Zone (10), die insbesondere zwischen zwei im Wesentlichen parallelen Hauptseiten der Vorrichtung ausgebildet ist, und eine optisch aktive Zone (12) umfasst, wobei diese optisch aktive Zone insbesondere eine Zone ist, die eine Sammellinse bildet.

8. Kamera nach dem vorhergehenden Anspruch, **dadurch gekennzeichnet, dass** die optisch aktive Zone von den Rändern der multifokalen Vorrichtung entfernt ist.

9. Kamera nach einem der Ansprüche 7 und 8, wobei das Objektiv eine optische Achse (Ox) aufweist, **dadurch gekennzeichnet, dass** die optisch aktive Zone einen optischen Mittelpunkt aufweist, der bezogen auf die optische Achse des Objektivs versetzt ist.

10. Verfahren zur Steuerung eines oder mehrerer Scheibenwischer einer Windschutzscheibe eines Kraftfahrzeugs, umfassend die folgenden Schritte:
- Erkennen des Vorhandenseins von Regen auf der Windschutzscheibe des Fahrzeugs mithilfe einer Kamera nach einem der vorhergehenden Ansprüche,
- Auslösen des Scheibenwischers oder der Scheibenwischer in Abhängigkeit von dem Vorhandensein von Regen auf der Windschutzscheibe.

11. Verfahren nach dem vorhergehenden Anspruch, **dadurch gekennzeichnet, dass** die Erkennung von Regen durch die Multifunktionskamera ohne Hilfe eines separaten Sensors dieser Kamera durchgeführt wird.

## Claims

1. Camera (1) arranged to be able to be integrated into a motor vehicle, including:
- an electronic sensor (2),
- a multifocal and in particular bifocal optical device (3),
- a far-field focused optical objective (4),
the multifocal optical device and the optical objective being arranged to be able to form, on the sensor, a far-field focused first image (IM1) and a near-field focused second image (IM2), these first and second images occupying separate respective regions of the sensor,
**characterized in that**
the multifocal device includes a shield forming region (17) placed between an optically neutral zone and an optically active zone, this shield forming region in particular being arranged to limit the overlap between the first and second images on the sensor.

2. Camera according to the preceding claim, **characterized in that** the multifocal device (3) is placed between the sensor and the objective.

3. Camera according to one of the preceding claims, **characterized in that** the camera includes a holder (5), in particular comprising a printed circuit board, on which the sensor is placed, and **in that** the multifocal optical device is securely fastened to this holder.

4. Camera according to the preceding claim, **characterized in that** the camera includes a strip for protecting the sensor, and **in that** the multifocal optical device is adhesively bonded to this protecting strip.

5. Camera according to one of Claims 1 to 3, **characterized in that** the multifocal optical device is placed directly in front of the sensor (2), and preferably also serves to protect the sensor.

6. Camera according to one of the preceding claims, **characterized in that** the multifocal optical device includes a strip that is in particular made of glass.

7. Camera according to one of the preceding claims, **characterized in that** the multifocal optical device includes an optically neutral zone (10) that is in particular formed between two substantially parallel main faces of the device, and an optically active zone (12), this optically active zone in particular being a zone forming a convergent lens.

8. Camera according to the preceding claim, **characterized in that** the optically active zone is located away from the edges of the multifocal device.

9. Camera according to either of Claims 7 and 8, the objective having an optical axis (Ox), **characterized in that** the optically active zone has an optical centre that is offset with respect to the optical axis of the objective.

10. Method for controlling one or more wipers of a motor-vehicle windscreen, including the following steps:
- detecting the presence of rain on the windscreen of the vehicle using a camera according to one of the preceding claims, and
- triggering, depending on the presence of rain on the windscreen, the one or more wipers.

11. Method according to the preceding claim, **characterized in that** rain is detected by the multifunction camera, without the help of a sensor separate from this camera.
